# EUROPÄISCHE PATENTSCHRIFT

(11) **EP 3 468 853 B1**
(45) Veröffentlichungstag und Bekanntmachung des Hinweises auf die Patenterteilung: **18.12.2019**
(21) Anmeldenummer: 17734714.3
(22) Anmeldetag: 28.06.2017
(51) Int. Cl.: G01C 21/36, B60W 50/08, B60W 50/14, B60W 30/18, B60W 30/02, G10L 15/22

(54) **PROAKTIVE STEUERUNG EINES ASSISTENZSYSTEMS EINES KRAFTFAHRZEUGS**
PROACTIVE CONTROL OF AN ASSISTANCE SYSTEM OF A MOTOR VEHICLE
COMMANDE PROACTIVE D'UN SYSTÈME D'ASSISTANCE D'UN VÉHICULE À MOTEUR

(30) Priorität: 08.07.2016 DE 102016008365
(43) Veröffentlichungstag der Anmeldung: 17.04.2019
(73) Patentinhaber: Audi AG, 85045 Ingolstadt (DE)
(72) Erfinder: GRUCHALSKI, Gerd, 85049 Ingolstadt (DE)
(86) Internationale Anmeldenummer: PCT/EP2017/066066
(87) Internationale Veröffentlichungsnummer: WO 2018/007229

(56) Entgegenhaltungen:
- DE-A1-102009 048 954
- DE-A1-102011 016 080
- DE-A1-102012 004 601
- DE-A1-102014 203 138

## Beschreibung

Die Erfindung betrifft ein Verfahren zum Steuern eines Assistenzsystems eines Kraftfahrzeugs, wobei das Assistenzsystem ein Fahrerassistenzsystem umfasst. Die Erfindung betrifft auch ein Assistenzsystem für ein Kraftfahrzeug mit einem Fahrerassistenzsystem, welches ausgelegt ist, eine Fahrsituation des Kraftfahrzeugs zu überwachen.

Traditionellerweise ist es stets der Fahrer eines Kraftfahrzeugs, welcher das Kraftfahrzeug aktiv lenkt und entsprechend den Verkehr beobachten muss. Daher bestehen hohe Ansprüche an die Minimierung der Fahrerablenkung durch zusätzliche Vorrichtungen und Systeme im Kraftfahrzeug wie beispielsweise Fahrerassistenzsysteme. In diesem Zusammenhang hat sich gezeigt, dass eine Sprachbedienung gegenüber einer manuellen Bedienung von Fahrzeugfunktionen bezüglich einer minimierten Fahrerablenkung vorteilhaft ist. Dabei konzentriert sich die Sprachbedienung heute oft auf Unterhaltungs- und/oder Komfortfunktionen eines Assistenzsystems.

So offenbart beispielsweise die DE 10 2011 121 110 A1 ein Verfahren zum Betreiben eines Sprachdialogsystems in einem Fahrzeug, bei dem ein zu einem Sprachdialog gehöriger Systemzustand des Sprachdialogsystems ermittelt und farblich dargestellt wird. Dabei wird auch eine Spracheingabe erfasst und mit gespeicherten Sprachbefehlen verglichen.

Die DE 10 2012 022 630 A1 offenbart ein Verfahren zur Kommunikation eines Fahrers mit einem Fahrerassistenzsystem. Dabei erfolgt ein Erfassen einer Spracheingabe, welche durch eine Datenverarbeitungseinheit syntaktisch und semantisch analysiert wird. Dabei werden Schlagworte erkannt, welche in einer Datenbank gespeichert und aufbereitet vorliegen, um sodann den Schlagworten einen oder mehrere Betriebsparameter zuzuordnen. Aus den Betriebsparametern erfolgt dann ein Erstellen einer Ausgabeinformation, welche über eine Sprachausgabe zur Informationsübermittlung an den Fahrer genutzt wird. Somit kann beispielsweise eine Fahrgeschwindigkeit in autonomen Fahrbetrieben eines Kraftfahrzeugs eingestellt werden. Das System kann hier eine Rückfrage an den Fahrer ausgeben, falls eine Eingabe zu ungenau war.

Die DE 10 2014 203138 A1 offenbart die Unterstützung eines Fahrers bei schlechter Sicht.

Es stellt sich somit die Aufgabe, die kognitive Belastung eines Fahrers durch ein Assistenzsystem zu reduzieren und so insbesondere die Sicherheit im Straßenverkehr und den Komfort zu erhöhen.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Die Erfindung betrifft ein Verfahren zum Steuern eines Assistenzsystems eines Kraftfahrzeugs, wobei das Assistenzsystem ein Fahrerassistenzsystem umfasst oder ist. Ein erster Schritt ist dabei ein Überwachen einer Fahrsituation des Kraftfahrzeugs (in welcher sich das Kraftfahrzeug befindet), die insbesondere einen Fahrzustand des Kraftfahrzeugs umfassen kann, durch das Fahrerassistenzsystem des Kraftfahrzeugs. Die überwachte Fahrsituation kann auch eine aus der aktuellen Fahrsituation mit einer vorgegebenen Wahrscheinlichkeit resultierende zukünftige Fahrsituation des Kraftfahrzeugs umfassen. Bei dem Überwachen kann es sich insbesondere auch um ein wiederholtes oder fortlaufendes Überwachen handeln. Ein nächster Schritt ist hier ein Ermitteln zumindest einer für den Fahrer aus der überwachten Fahrsituation resultierenden Handlungsoptionen durch eine Steuereinrichtung des Assistenzsystems. So kann beispielsweise daraus, dass das Kraftfahrzeug sich auf einer Autobahn befindet, als für den Fahrer daraus resultierende Handlungsoption ein Aktivieren einer teilautomatischen oder vollautomatischen Fahrfunktion des Fahrerassistenzsystems ermittelt werden. Es kann auch beispielsweise aus einer Routeninformation eines Navigationssystems des Kraftfahrzeugs, welches Teil des Fahrerassistenzsystems ist, als resultierende Handlungsoption ermittelt werden, dass eine teilautomatische oder vollautomatische Fahrfunktion des Fahrerassistenzsystems zu einem künftigen Zeitpunkt oder an einer künftig gemäß der Routeninformation von dem Fahrzeug zu erreichenden Position deaktiviert wird. Beispielsweise kann dies der Fall sein, wenn auf einem sich auf der Route befindlichen Abschnitt hinter der zu erreichenden Position, welcher an dem künftigen Zeitpunkt, also beispielsweise in einem Zeitraum von wenigen Minuten, durch das Kraftfahrzeug erreicht wird, ein Anlass zum Deaktivieren der teil- oder vollautomatischen Fahrfunktion vorliegt, wie dies zum Beispiel durch eine Baustelle oder auch durch ein Verlassen der Autobahn gegeben sein kann.

Die resultierende Handlungsoption kann also sowohl ein Anpassen zumindest einer von dem Assistenzsystem bereits bereitgestellten oder aktivierten Funktion des Assistenzsystems umfassen, als auch ein Bereitstellen zumindest einer noch nicht aktivierten Funktion des Assistenzsystems. Diese jeweilige Funktion wird im Folgenden als die der Handlungsoption entsprechende Funktion des Assistenzsystems bezeichnet. Die entsprechende Funktion oder die entsprechenden Funktionen können dabei sowohl Fahrfunktionen des Fahrerassistenzsystems umfassen als auch Informations- und/oder Komfortfunktionen des Assistenzsystems. Die Funktion umfasst einen Überholvorgang, insbesondere ein Einleiten eines Überholvorgangs, und/oder eine Wahl einer Fahrspurwahl und/oder einen Fahrspurwechsel. Das Ermitteln erfolgt dabei unter Berücksichtigung, insbesondere ausschließlich unter Berücksichtigung, von mittels der Steuereinrichtung unabhängig von einer Nutzereingabe an das Assistenzsystem abrufbaren Daten. Die Daten können somit insbesondere in dem Assistenzsystem, dem Fahrzeug oder einer fahrzeugexternen Recheneinrichtung wie einer Cloud gespeichert sein. Ein weiterer Schritt ist das Ausgeben einer Anfrage zum Bereitstellen einer der ermittelten Handlungsoption entsprechenden Funktion des Assistenzsystems an den Fahrer durch eine Ausgabeeinrichtung des Assistenzsystems. Das Bereitstellen umfasst hier analog zu obigen Ausführungen insbesondere auch ein Bereitstellen einer angepassten bereits aktivierten Funktion des Assistenzsystems, also ein Anpassen einer bereits bereitgestellten und/oder aktivierten Funktion des Assistenzsystems. Ein weiterer Schritt ist sodann ein Erfassen einer Antwortreaktion des Fahrers durch eine Erfassungseinrichtung des Assistenzsystems und ein Bereitstellen der Funktion des Assistenzsystems in Abhängigkeit der erfassten Antwort durch die Steuereinrichtung. Das Bereitstellen in Abhängigkeit der erfassten Antwort kann insbesondere auch ein Steuern und/oder ein Anpassen der Funktion des Assistenzsystems umfassen.

Das hat den Vorteil, dass das Assistenzsystem oder System dem Fahrer von sich aus Hinweise und Informationen bieten oder ihn proaktiv nach einer notwendigen Entscheidung fragen kann. Falls das Assistenzsystem sich in einem teilautonomen oder autonomen Fahrmodus, bei einem sogenannten pilotierten Fahren, in einer Fahrsituation unsicher ist, also zu keinem eindeutigen Ergebnis gelangt, bietet das Assistenzsystem so von sich aus dem Fahrer eine oder mehrere Handlungsoptionen an und steuert das Assistenzsystem entsprechend der Antwortreaktion oder Weisung des Fahrers. Da der Fahrer bei einem pilotierten Fahren gar nicht mehr aktiv ins Fahrgeschehen eingebunden ist, ist er in einem großen Maß kognitiv entlastet, bis das pilotierte Fahren endet und der Fahrer wieder aktiv die Kontrolle übernehmen muss. Durch das Assistenzsystem kann der Fahrer dennoch informiert und/oder zu einer Entscheidung angefragt werden, falls sich beispielsweise eine Änderung einer Fahrsituation oder eine sonstige Notwendigkeit hierzu ergibt, insbesondere also falls sich eine neue oder veränderte Handlungsoption für den Fahrer ergibt. Die eine oder mehrere Handlungsoptionen können dabei eine Untermenge aller möglichen Handlungsoptionen für den Fahrer bilden und beispielsweise nur zwei oder drei Handlungsoptionen sein. Dies steigert den Komfort gerade bei pilotiertem Fahren erheblich und bildet im Falle von Problemsituationen auch einen Sicherheitsgewinn. Dadurch, dass das System proaktiv agiert, muss der Fahrer sich auch nicht in jeder Fahrsituation sämtliche möglichen Handlungsoptionen, welche auch die unterschiedlichen Funktionen moderner Assistenz- oder Fahrerassistenzsysteme betreffen, vergegenwärtigen, sondern das System entlastet den Fahrer und bietet ihm nur sinnvolle Funktionen an, welche den aus der überwachten Fahrsituation resultierenden oder abgeleiteten Handlungsoptionen entsprechen. Die fahrzeugseitige Initiative ohne einen vorhergehenden, das Assistenzsystem aktivierenden Befehl oder eine entsprechende, das Assistenzsystem oder eine Funktion des Assistenzsystems aktivierende Anfrage erlaubt es so dem Fahrer, seine Aufmerksamkeit ganz auf das Fahrgeschehen oder auf sonstige Tätigkeiten, welche ihm wichtig sind, zu lenken und führt so zu einer kognitiven Entlastung, welche Sicherheit und Komfort steigert. Im Bedienkonzept spiegelt sich damit der grundlegende Paradigmenwechsel im Fahrerumfeld, welcher mit dem Wechsel von dem manuell gesteuerten Fahren zu dem teil- oder vollautonomen beziehungsweise pilotierten Fahren mit geänderten Fahreranforderungen und Fahreransprüchen einhergeht.

Das Ermitteln der Handlungsoptionen, welche insbesondere ein Anpassen einer bereits bereitgestellten oder aktivierten Funktion umfassen können, durch die Steuereinrichtung liefert zumindest zwei unterschiedliche Ergebnisse, welche von der Steuereinrichtung als gleichwertig eingestuft werden, und die Anfrage zum Bereitstellen der Funktion betrifft ein Auswählen unter den Funktionen, welche den Handlungsoptionen zugeordnet sind, insbesondere unter den unterschiedlichen angepassten Funktionen, welche den unterschiedlichen Ergebnissen entsprechen. Es kann hier insbesondere auch vorgesehen sein, dass, falls das Ermitteln der Handlungsoptionen durch die Steuereinrichtung zumindest zwei unterschiedliche Ergebnisse liefert, welche von der Steuereinrichtung als gleichwertig eingestuft werden, die Anfrage zum Bereitstellen der Funktion ein Auswählen unter den Funktionen betrifft, welche den beiden unterschiedlichen Ergebnissen entsprechen. Die Steuereinrichtung kann dabei insbesondere anhand eines vorgegebenen und/ oder vorgebbaren Kriteriums entscheiden, wann die Ergebnisse als gleichwertig eingestuft werden. Die Ergebnisse müssen also zum Beispiel nicht gleichwertig im Sinne von gleichwirkend sein, sondern können beispielsweise auch nur eine große Ähnlichkeit hinsichtlich des Kriteriums aufweisen, sodass das Kriterium sich für die Ergebnisse um weniger als einen vorgegebenen Betrag unterscheidet.Für die Ergebnisse kann also allgemein gemäß dem Kriterium eine Rückfrage und/oder Bestätigung als sinnvoll erachtet und in Folge durchgeführt werden. Durch das Kriterium kann auch ein Kontext der aktuellen Fahrsituation und/oder eine in der Steuereinrichtung hinterlegte Historie und/ oder ein Fahrerprofil berücksichtigt werden. Neben den (Fahr-)Situationen, in welchen das Fahrerassistenzsystem autonom entscheidet, kann das Fahrerassistenzsystem somit ausgelegt sein, in vorbestimmten Fahrsituationen nicht selber zu entscheiden, sondern den Fahrer von sich aus zu fragen.

Das hat den Vorteil, dass durch das Assistenzsystem dem Fahrer so nicht nur in für das Assistenzsystem eindeutigen Fahrsituationen eine kognitive Entlastung verschafft wird, sondern auch in ambivalenten Situationen, in denen die Steuereinrichtung oder das Assistenzsystem selber keine eindeutige Lösung findet. Durch die Vorauswahl der Steuereinrichtung wird jedoch auch in diesen Situationen eine kognitive Entlastung des Fahrers erreicht und Sicherheit und Komfort erhöht. So kann der Fahrer in einer ambivalenten Fahrsituation beispielsweise schneller reagieren.

Alternativ oder ergänzend kann das Fahrerassistenzsystem ausgelegt sein, in vorbestimmten Fahrsituationen autonom zu entscheiden, dabei aber den Fahrer über die Entscheidung und insbesondere auch einen Entscheidungsgrund zu informieren. Das hat den Vorteil, dass das Vertrauen des Fahrers in das Fahrerassistenzsystem gestärkt wird, da der Fahrer eine zusätzliche Information über das Verhalten des Kraftfahrzeugs erhält. Auch damit wird eine kognitive Entlastung erreicht.

In einer vorteilhaften Ausführungsform ist hier vorgesehen, dass das Ausgeben der Anfrage durch eine Sprachausgabeeinrichtung des Assistenzsystems erfolgt. Die Anfrage kann somit ein Sprachsignal umfassen. Das hat den Vorteil, dass die Anfrage den Fahrer unabhängig von einer Körperhaltung erreicht, was gerade bei einem pilotierten Fahren vorteilhaft ist. Dort wird in vielen Situationen das Lenkrad nicht mehr angefasst und durch ein Sitzen in entspannter Haltung sind möglicherweise auch weitere Bedienelemente teilweise nicht mehr in einer bequemen Griffweite. Dadurch, dass eine Sprachausgabe auch richtungsunspezifisch erfolgen kann, wird der Fahrer auch nicht von dem Verkehrsgeschehen optisch abgelenkt beziehungsweise muss seine Aufmerksamkeit nicht auf Raumbereiche, welche nicht das Verkehrsgeschehen betreffen, richten.

In einer weiteren vorteilhaften Ausführungsform ist vorgesehen, dass das Assistenzsystem ein Informationsunterhaltungssystem oder Infotainment-System umfasst, und die Funktion des Assistenzsystems eine Funktion des Informationsunterhaltungssystems umfasst oder ist. Dabei erfolgt durch die Funktion eine Bereitstellung eines Informations- und/oder Unterhaltungsinhalts. Der Informations- und/oder Unterhaltungsinhalt ist dabei insbesondere an eine im Assistenzsystem oder im Fahrerassistenzsystem hinterlegte Gewohnheit des Fahrers und/oder an einen im Fahrerassistenzsystem hinterlegten Zielort und/oder an eine in dem Fahrerassistenzsystem hinterlegte Route und/oder an eine im Fahrerassistenzsystem hinterlegte Fahrtdauer und/oder an einen im Assistenzsystem hinterlegten Terminkalender angepasst. Unter hinterlegt ist hier abgespeichert und/oder abrufbar zu verstehen. Beispielsweise kann ein entfernt auf einer Cloud hinterlegter Terminkalender an das Assistenzsystem übertragen werden und ist damit in diesem hinterlegt und steht zur Verwendung zur Verfügung. Insbesondere kann das Verfahren sich hier auf eine Fahrsituation in einem zumindest teilautonomen, insbesondere teilautonomen oder autonomen, Fahrmodus, also auf ein pilotiertes Fahren beziehen. Gerade dort kann somit dem Fahrer die durch das pilotierte oder (teil-)autonome Fahren freigewordene Fahrzeit zusätzlichen Nutzen bringen, welcher durch die genannten Ausführungsformen maximiert wird.

Zum Beispiel können so bei längeren Fahrten vorausgewählt länger dauernde oder mehrteilige Funktionen beziehungsweise Dienste des Assistenzsystems, beispielsweise ein Abspielen von einem Film oder einem Hörbuch, angeboten werden bei kürzeren Fahrten stattdessen kürzer dauernde Funktionen oder Dienste, beispielsweise ein Musikdienst. Es bieten sich während mehrstündiger, pilotierter Autofahrten zum Beispiel Podcasts, insbesondere mehrteilige Podcasts zu anspruchsvolleren Themen, und/oder Weiterbildungsangebote an wie zum Beispiel interaktive Sprachkurse und deren Aufbereitung und Abspielen. Allgemein kann somit eine persönliche intelligente Assistenzfunktion realisiert werden, welche den Fahrer insbesondere während längerer Fahrten unterstützt und unterhält, und dabei über Berücksichtigung der genannten Aspekte wie der hinterlegten Gewohnheiten oder hinterlegten Zielorte und dergleichen dem Fahrer eine lästige und kognitiv belastende Vorauswahl abnimmt und so maßgeschneiderte Funktionen zur Verfügung stellen kann.

In einer weiteren Ausführungsform ist vorgesehen, dass die Antwortreaktion eine Sprachantwort ist und das Erfassen der Antwortreaktion durch eine Spracherfassungseinrichtung des Assistenzsystems erfolgt. Insbesondere kann hier bei Nichterfassen einer Antwortreaktion, insbesondere bei Nichterfassen einer eindeutigen Antwortreaktion, ein aktueller Status beibehalten werden oder bei einem pilotierten Fahren die Kontrolle über das Fahren an den Fahrer zurückgegeben werden, der zumindest teilautonome Fahrmodus also beendet werden. Das hat den Vorteil, dass das System besonders komfortabel bedient werden kann und unabhängig von einer körperlichen Haltung des Fahrers ist. Somit kann auch bei einem pilotierten Fahren, bei welchem beispielsweise das Lenkrad nicht angefasst wird oder auch weitere Bedienelemente nicht in bequemer Griffweite sind, das Assistenzsystem sicher und komfortabel gesteuert werden, ohne dass beispielsweise ein Suchen von Bedienelementen durch den Fahrer erforderlich wäre.

In einer weiteren besonders vorteilhaften Ausführungsform ist vorgesehen, dass das Kraftfahrzeug sich in der überwachten Fahrsituation in einem zumindest teilautonomen, also insbesondere teilautonomen oder hochautonomen oder vollautonomen, Fahrbetrieb befindet. Das hat den Vorteil, dass die besonders große Vielfalt an Handlungsoptionen, die sich dem Fahrer durch die freigewordene Fahrzeit beziehungsweise durch die weniger große Bindung kognitiver Kapazitäten des Fahrers an das Fahrgeschehen bietet, dank des Assistenzsystems besonders gezielt eingegrenzt wird, sodass sich besonders große Vorteile ergeben. Bei einem Wechsel der Verkehrssituation oder des Fahrzustandes, welcher möglicherweise dem Fahrer entgangen ist, kann das Assistenzsystem dem Fahrer eine initiative, das heißt proaktive Rückfrage oder Rückmeldung geben. Gerade in ambivalenten Fahrsituationen ist das proaktive Ausgeben der Anfrage zum Bereitstellen einer Funktion des Assistenzsystems vorteilhaft. Das Ausgeben der Anfrage kann hier auch das Ausgeben einer proaktiven Warnung oder eines proaktiven Hinweises umfassen. Proaktiv sind Warnungen oder Hinweise dann, wenn sie sich auf eine künftige Fahrsituation beziehen, welche mit einer vorgegebenen Mindestwahrscheinlichkeit auf eine aktuelle Fahrsituation folgen oder sich aus dieser ergeben. In einer anderen vorteilhaften Ausführungsform ist vorgesehen, dass die Funktion des Assistenzsystems eine Funktion des Fahrerassistenzsystems umfasst oder ist. Die Funktion kann insbesondere den Fahrer beim Fahren unterstützen und/oder ihm das Fahren abnehmen. Bevorzugt unterstützt die Funktion des Fahrer in einer aktuellen Fahrsituation. Insbesondere umfasst die Funktion eine Funktion, welche eine Routenführung durch das Fahrerassistenzsystem betrifft oder umfasst. So kann das Assistenzsystem beispielsweise von sich aus eine Alternativroute zum Umfahren eines Hindernisses wie zum Beispiel eines Staus und/oder eines Unfalls vorschlagen. Dabei wird die Alternativroute insbesondere auch von sich aus vorgeschlagen, wenn das Hindernis Fahrtantritt, also bei der initialen Erstellung der Routenführung, noch nicht vorhanden war. Die Funktion kann dabei eine zumindest teilautonome Funktion sein oder umfassen. Das hat den Vorteil, dass der Fahrer besonders effektiv entlastet wird, da die Funktionen des Fahrerassistenzsystems dem Fahrer besonders viele Ressourcen bindende Aufgaben abnehmen können. Dies ist gerade für Funktionen, welche eine Routenführung oder eine aktuelle Fahrsituation wie einen Überholvorgang und/oder eine Fahrspurwahl bzw. einen Fahrspurwechsel betreffen oder umfassen, ausgeprägt.

Dabei kann vorgesehen sein, dass die Funktion des Fahrerassistenzsystems eine fahrstabilisierende Funktion, beispielsweise eine Traktionskontrolle, umfasst. Insbesondere kann hier das Ausgeben eine Warnmeldung an den Fahrer umfassen. Das hat den Vorteil, dass die Sicherheit in besonders großem Maße erhöht wird.

In einer weiteren besonders vorteilhaften Ausführungsform ist vorgesehen, dass die Steuereinrichtung zum Ermitteln der Handlungsoptionen nutzerbezogene Daten und/oder fahrzeugbezogene Daten und/oder weltbezogene Daten auswertet. Bei den nutzerbezogenen Daten kann es sich insbesondere um einen elektronischen Kalender und/oder elektronische Mitteilungen und/oder eine Nutzungshistorie des Assistenzsystems handeln. Die fahrzeugbezogenen Daten können insbesondere einen Fahrzeugzustand und/oder einen Straßenzustand und/oder einen Fahrzustand und/oder Verkehrsdaten umfassen. Die weltbezogenen Daten können insbesondere Nachrichten und/oder Wetterdaten umfassen. Die Daten können dabei insbesondere durch die Steuereinrichtung von einer entfernten Recheneinrichtung, beispielsweise einer sogenannten Cloud, abgerufen werden. Das hat den Vorteil, dass die zumindest eine Handlungsoption des Fahrers besonders genau vorhergesagt beziehungsweise ermittelt werden kann und somit auch die entsprechende Funktion, welche der jeweiligen Handlungsoption zugeordnet ist, besonders genau und für den Fahrer passend angeboten werden können.

Die Erfindung betrifft auch ein Assistenzsystem für ein Kraftfahrzeug, mit einem Fahrerassistenzsystem, welches ausgelegt ist, eine Fahrsituation des Kraftfahrzeugs zu überwachen. Das Fahrerassistenzsystem kann überdies ausgelegt sein, eine Fahrfunktion zumindest teilautomatisiert, also teil- , hoch- oder vollautomatisiert, beispielsweise im Rahmen des sogenannten pilotierten Fahrens, bereitzustellen. Wesentlich ist hier eine Steuereinrichtung des Assistenzsystems, welche ausgelegt ist, zumindest eine für den Fahrer aus der überwachten Fahrsituation resultierenden Handlungsoptionen zu ermitteln, und zwar unter Berücksichtigung von mittels der Steuereinrichtung unabhängig von einer Nutzereingabe an das Assistenzsystem abrufbaren Daten. Das Assistenzsystem umfasst auch eine Ausgabeeinrichtung, welche ausgelegt ist, eine Anfrage zum Bereitstellen einer der Handlungsoption entsprechenden Funktion des Assistenzsystems an den Fahrer auszugeben. Auch eine Erfassungseinrichtung, welche ausgelegt ist, eine Antwortreaktion des Fahrers zu erfassen, ist Teil des Assistenzsystems. Dabei ist die Steuereinrichtung weiterhin ausgelegt, die Funktion des Assistenzsystems in Abhängigkeit von der erfassten Antwort bereitzustellen.

Vorteile und vorteilhafte Ausführungsformen des Assistenzsystems entsprechen hier Vorteilen und vorteilhaften Ausführungsformen des beschriebenen Verfahrens.

Die Erfindung betrifft auch ein Kraftfahrzeug mit einem solchen Assistenzsystem.

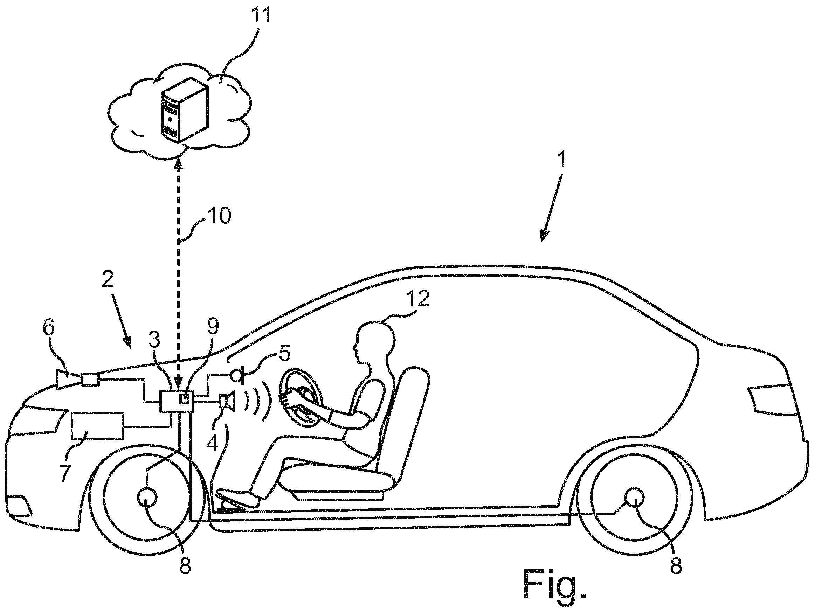

Die vorstehend in der Beschreibung genannten Merkmale und Merkmalskombinationen, sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in der Figur nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Ausführungsbeispiele der Erfindung werden nachfolgend anhand einer schematischen Zeichnung näher erläutert.

Dabei zeigt die einzige Figur eine beispielhaft Ausführungsform eines Assistenzsystems in einem Kraftfahrzeug.

In der einzigen Figur weist das Kraftfahrzeug 1 ein Assistenzsystem 2 auf, welches hier neben einer Steuereinrichtung 3 auch eine vorliegend als Sprachausgabeeinrichtung ausgeführte Ausgabeeinrichtung 4 sowie eine hier als Mikrofon ausgeführte Erfassungseinrichtung 5 umfasst. Des Weiteren umfasst das Assistenzsystem 2 eine hier als Kamera ausgeführte Überwachungseinheit 6. Vorliegend ist die Steuereinrichtung 3 auch mit einem Motor 7 und Radsystemen 8 gekoppelt. Das Assistenzsystem 2 umfasst damit hier auch ein Fahrerassistenzsystem, mittels welchem vorliegend eine Fahrsituation des Kraftfahrzeugs überwacht und im gezeigten Beispiel auch ein pilotiertes Fahren, also beispielsweise ein teilautonomes oder hochautonomes beziehungsweise vollautonomes Fahren realisiert werden kann.

Im gezeigten Beispiel umfasst die Steuereinrichtung 5 auch ein Positionserfassungsmodul 9, mittels welchem eine Position des Kraftfahrzeugs 1 ermittelt werden kann. Somit ist in der dargestellten Ausführungsform auch ein Navigationssystem Teil des Assistenzsystems 2.

Im gezeigten Beispiel ist die Steuereinrichtung 3 auch über eine Drahtlosverbindung 10 mit einer fahrzeugexternen Recheneinrichtung 11, vorliegend einer sogenannten Cloud, gekoppelt und kann aus dieser Daten, beispielsweise Verkehrs- und/oder Wetterdaten, abrufen. Diese Daten können dabei im gezeigten Beispiel in Abhängigkeit der von dem Positionserfassungsmodul 9 erfassten Position des Kraftfahrzeugs 1 berücksichtigt werden.

So kann nun beispielsweise anhand Daten der Überwachungseinrichtung 6, sowie einer aus der entfernten Recheneinrichtung 11 abgerufenen Information, beispielsweise über einen Verkehrsstand oder einen Stau, eine Fahrsituation des Kraftfahrzeugs 1 überwacht werden. Dabei kann beispielsweise auch eine in dem Fahrerassistenzsystem hinterlegte Routenführung berücksichtigt werden.

Aus der überwachten Fahrsituation, welche auch eine aus der überwachten Fahrsituation mit einer vorgegebenen Mindestwahrscheinlichkeit resultierende zukünftige Fahrsituation des Kraftfahrzeugs 1 umfassen kann, ermittelt nun die Steuereinrichtung 3 eine resultierende Handlungsoption für einen Fahrer 12 des Kraftfahrzeugs 1. Dies erfolgt unter Berücksichtigung von mittels der Steuereinrichtung 5 unabhängig von einer Nutzereingabe des Fahrers 12 an das Assistenzsystem 2 abrufbaren Daten. Beispielsweise können dies Sensordaten des Kraftfahrzeugs 1 und/oder Daten einer automatischen Routenführung eines Navigationssystems und/oder Daten aus der entfernten Recheneinrichtung 11 sein.

Es folgt sodann ein Ausgeben einer Anfrage zum Bereitstellen einer der Handlungsoption des Fahrers 12 entsprechenden Funktion des Assistenzsystems 2 an den Fahrer 12 durch die Ausgabeeinrichtung 4. Da das Assistenzsystem 2 fahrzeugseitig die Initiative ergreifen kann, kann es so von sich aus beispielsweise nach einem Erhalten einer Information über einen Stau auf der gemäß einer automatischen Routenführung in der vor dem Kraftfahrzeug 1 liegenden Strecke anfragen, ob es die geplante Route ändern soll. So kann beispielsweise als Sprachsignal dem Fahrer 12 zunächst die Information gegeben werden, dass auf der Strecke ein Stau vorliegt, gefolgt von der Frage, ob eine Routenführung aktualisiert werden soll, um den Stau zu umfahren. Im Falle eines teilautonomen oder vollautonomen Fahrens kann das Assistenzsystem 2 dem Fahrer 12 somit anbieten, den Stau selbständig zu umfahren.

Auch wenn beispielsweise der Tankinhalt nicht bis zu einem Ziel einer in dem Assistenzsystem hinterlegten Route reicht, kann das Assistenzsystem 2 den Fahrer darüber informieren und fragen, ob es beispielsweise frühzeitig einen Tankstopp einlegen soll. Alternativ oder ergänzend kann das Assistenzsystem 2 auch fragen, ob es eine Tankstelle anfahren soll, wenn eine definierte oder vorgegebene Restreichweite für das Kraftfahrzeug 1 unterschritten wird. Beispielsweise können bei einer verbleibenden Restreichweite von 50 Kilometern oder weniger eine entsprechende Anfrage zum Anpassen einer Routenführung oder zum Anpassen eines pilotierten Fahrens an den Fahrer ausgegeben werden.

Gerade bei einem pilotierten, also teilautonomen oder hochautonomen oder vollautonomen Fahren kann das Assistenzsystem 2 auch eine Anfrage ausgeben, welche ein Auswählen unter verschiedenen Funktionen des Assistenzsystems 2 betrifft. So kann beispielsweise der Fahrer 12 gefragt werden, ob das Kraftfahrzeug 1 in einem pilotierten Fahrmodus ein vorausfahrendes Fahrzeug überholen soll, falls die Recheneinrichtung 5 selber keine klare Entscheidung oder keine klare Priorität liefert.

Überdies kann bei einem pilotierten Fahren unter Berücksichtigung einer zukünftigen Fahrsituation, also beispielsweise eines gemäß der Routenführung künftig zu erreichenden Ortes, auch angekündigt werden, dass der Fahrer das pilotierte Fahren deaktivieren und selber das Steuer übernehmen soll. Beispielsweise kann dies angefragt werden, falls auf der Strecke vor dem Kraftfahrzeug 1 eine Baustelle liegt. In diesem Fall könnte beispielsweise die Anfrage den Fahrer auffordern, für diese Situation, zum Beispiel in drei Minuten und/oder 5 Kilometern, das Steuer zu übernehmen und das pilotierte Fahren zu deaktivieren. Die dieser Handlungsoption, also dem Übernehmen des Steuers, entsprechende Funktion des Assistenzsystems wäre dann vorliegend ein Anpassen in Form eines Abschaltens einer aktivierten oder bereits bereitgestellten Funktion des Assistenzsystems 2, nämlich der automatischen Fahrfunktion des Assistenzsystems 2. Die entsprechende Anfrage kann auch eine Warnmeldung umfassen. Beispielsweise kann das Assistenzsystem 2, falls es eine Straßenmarkierung, zum Beispiel im Bereich der Baustelle, nicht eindeutig erkennen kann, als Anfrage ausgeben, dass der Fahrer das Steuer übernehmen soll.

Steuert der Fahrer 12 das Kraftfahrzeug 1 manuell, kann das System beispielsweise eine Anfrage ausgeben, ob das Assistenzsystem 2 das Steuer übernehmen soll, also beispielsweise falls das Kraftfahrzeug 1 sich auf einer Autobahn befindet oder auf eine solche einfährt, anfragen, ob das pilotierte Fahren aktiviert werden soll.

In ähnlicher Weise kann das Fahrzeug darauf hinweisen, dass beispielsweise eine sich vor dem Kraftfahrzeug 1 befindliche Kurve eng ist oder der Straßenbelag auf einem sich vor dem Kraftfahrzeug 1 befindlichen Straßenabschnitt abgenutzt ist, sodass er seine Geschwindigkeit besser reduzieren sollte und entsprechend anbieten, dies für ihn zu übernehmen. Auch Hinweis auf eine maximal erlaubte Geschwindigkeit oder darauf, dass der Fahrer 12 in eine falsche Richtung fährt, beispielsweise in Form eines Hinweises auf eine gesperrte Durchfahrt, ist hier denkbar. In diesem Fall betrifft die Handlungsoption des Fahrers ein Reduzieren der Fahrzeuggeschwindigkeit beziehungsweise ein Ändern der Fahrtrichtung und die entsprechende Funktion des Assistenzsystems die Warnung beziehungsweise ein Angebot Tempo und/oder Fahrtrichtung zu ändern.

Alternativ oder ergänzend bietet sich gerade in Fällen des pilotierten Fahrens an, dass dem Fahrer 12 - beispielsweise unter Berücksichtigung einer voraussichtlichen Fahrtdauer des pilotierten Fahrens - ein oder mehrere verschiedene Unterhaltungsangebote gemacht werden. So kann beispielsweise durch das Assistenzsystem 2 angefragt werden, ob der Fahrer 12 einen Sprachkurs beispielsweise an einem zuvor erreichten Punkt fortsetzen möchte. Auch Angebote bezügliche weiterer in ihrem zeitlichen Umfang definierten Unterhaltsmöglichkeiten, beispielsweise Filme, können in Abhängigkeit einer zu erwartenden Fahrtdauer des pilotierten Fahrens angeboten werden. Schließlich kann die Steuereinrichtung 3 auch auf einen Kalender des Fahrers 12 zugreifen und diesem Hinweise auf entsprechende Einträge geben. So kann das Assistenzsystem 2 den Fahrer beispielsweise darüber informieren, ob ein im Kalender hinterlegter Termin in der aktuellen Verkehrslage noch rechtzeitig erreicht werden kann und entsprechend Handlungsoptionen beziehungsweise Funktionen des Assistenzsystems 2 wie eine Routenänderung oder einen Anruf zu anderen, an dem nicht haltbaren Termin beteiligten Personen anbieten.

## Patentansprüche

1. Verfahren zum Steuern eines Assistenzsystems (2) eines Kraftfahrzeugs (1), wobei das Assistenzsystem (2) ein Fahrerassistenzsystem umfasst, mit den Schritten:
- Überwachen einer Fahrsituation des Kraftfahrzeugs (1) durch das Fahrerassistenzsystem des Kraftfahrzeugs (1);
- Ermitteln zumindest einer für den Fahrer (12) aus der überwachten Fahrsituation resultierenden Handlungsoption durch eine Steuereinrichtung (3) des Assistenzsystems (2) und zwar unter Berücksichtigung von mittels der Steuereinrichtung (3) unabhängig von einer Nutzereingabe an das Assistenzsystem (2) abrufbaren Daten;
- Ausgeben einer Anfrage zum Bereitstellen einer der Handlungsoption entsprechenden Funktion des Assistenzsystems (2) an den Fahrer (12) durch eine Ausgabeeinrichtung (4) des Assistenzsystems (2);
- Erfassen einer Antwortreaktion des Fahrers durch eine Erfassungseinrichtung (5) des Assistenzsystems (2); und
- Bereitstellen der Funktion des Assistenzsystems (2) in Abhängigkeit der erfassten Antwortreaktion durch die Steuereinrichtung (3)
**dadurch gekennzeichnet, dass**
die Funktion des Assistenzsystems (2) eine Funktion des Fahrerassistenzsystems umfasst, die einen Überholvorgang und/oder eine Fahrspurwahl und/oder einen Fahrspurwechsel betrifft, und
falls das Assistenzsystem (2) in einem teilautonomen oder autonomen Fahrmodus in einer Fahrsituation zu keinem eindeutigen Ergebnis gelangt, das Assistenzsystem (2) von sich aus dem Fahrer (12) mehrere Handlungsoptionen anbietet und das Assistenzsystem (2) entsprechend der Antwortreaktion steuert, sodass
das Ermitteln der Handlungsoption durch die Steuereinrichtung (3) zumindest zwei unterschiedliche Ergebnisse liefert, welche von der Steuereinrichtung (3) als gleichwertig eingestuft werden, und die Anfrage zum Bereitstellen der Funktion ein Auswählen unter den Funktionen betrifft, welche den unterschiedlichen Ergebnissen entsprechen.

2. Verfahren nach Anspruch 1,
**dadurch gekennzeichnet, dass**
das Ausgeben der Anfrage durch eine Sprachausgabeeinrichtung des Assistenzsystems (2) erfolgt.

3. Verfahren nach einem der vorhergehenden Ansprüche,
**dadurch gekennzeichnet, dass**
das Assistenzsystem (2) ein Informations-Unterhaltungs-System umfasst, und die Funktion des Assistenzsystems (2) eine Funktion des Informations-Unterhaltungs-Systems umfasst, wobei durch die Funktion eine Bereitstellung eines Informations- und/oder Unterhaltungs-Inhaltes erfolgt, welcher insbesondere an eine im Assistenzsystem (2) hinterlegte Gewohnheit des Fahrers (12) und/oder an einen im Fahrerassistenzsystem hinterlegten Zielort und/oder an eine im Fahrerassistenzsystem hinterlegte Route und/oder an eine im Fahrerassistenzsystem hinterlegte Fahrtdauer und/oder an einen im Assistenzsystem (2) hinterlegten Terminkalender angepasst ist.

4. Verfahren nach einem der vorhergehenden Ansprüche,
**dadurch gekennzeichnet, dass**
die Antwortreaktion eine Sprachantwort ist und das Erfassen der Antwortreaktion durch eine Spracherfassungseinrichtung des Assistenzsystems (2) erfolgt.

5. Verfahren nach einem der vorhergehenden Ansprüche,
**dadurch gekennzeichnet, dass**
das Kraftfahrzeug (1) sich in der überwachten Fahrsituation in einem zumindest teilautonomen Fahrbetrieb befindet.

6. Verfahren nach einem der vorhergehenden Ansprüche,
**dadurch gekennzeichnet, dass**
die Funktion des Assistenzsystems (2) eine Funktion des Fahrerassistenzsystems umfasst, welche eine Routenführung durch das Fahrerassistenzsystem betrifft.

7. Verfahren nach Anspruch 6,
**dadurch gekennzeichnet, dass**
die Funktion des Fahrerassistenzsystems eine fahrstabilisierende Funktion umfasst und insbesondere das Ausgeben eine Warnmeldung an den Fahrer (12).

8. Verfahren nach einem der vorhergehenden Ansprüche,
**dadurch gekennzeichnet, dass**
die Steuereinrichtung (3) zum Ermitteln der Handlungsoption nutzerbezogene Daten, insbesondere einen elektronischen Kalender und/oder elektronische Mitteilungen und/oder eine Nutzungshistorie des Assistenzsystems (2), und/oder fahrzeugbezogene Daten, insbesondere einen Fahrzeugzustand und/oder einen Straßenzustand und/oder einen Fahrzustand und/oder Verkehrsdaten, und/oder weltbezogene Daten, insbesondere Nachrichten und/oder Wetterdaten, auswertet, welche insbesondere durch die Steuereinrichtung (3) von einer entfernten Recheneinrichtung (11) abgerufen werden.

9. Assistenzsystem (2) für ein Kraftfahrzeug (1), aufweisend
- ein Fahrerassistenzsystem, welches ausgelegt ist, eine Fahrsituation des Kraftfahrzeugs (1) zu überwachen;
- eine Steuereinrichtung (3), welche ausgelegt ist, zumindest eine für den Fahrer (12) aus der überwachten Fahrsituation resultierende Handlungsoption zu ermitteln, und zwar unter Berücksichtigung von mittels der Steuereinrichtung (3) unabhängig von einer Nutzereingabe an das Assistenzsystem (2) abrufbaren Daten;
- eine Ausgabeeinrichtung (4) des Assistenzsystems (2), welche ausgelegt ist, eine Anfrage zum Bereitstellen einer der Handlungsoption entsprechenden Funktion des Assistenzsystems (2) an den Fahrer (12) auszugeben;
- eine Erfassungseinrichtung (5), welche ausgelegt ist, eine Antwortreaktion des Fahrers (12) zu erfassen; wobei
- die Steuereinrichtung (3) ausgelegt ist, die Funktion des Assistenzsystems (2) in Abhängigkeit der erfassten Antwortreaktion bereitzustellen;
**dadurch gekennzeichnet, dass**
die Funktion des Assistenzsystems (2) eine Funktion des Fahrerassistenzsystems umfasst, die einen Überholvorgang und/oder eine Fahrspurwahl und/oder einen Fahrspurwechsel betrifft, und
das Assistenzsystem (2) dazu eingerichtet ist, dass, falls das Assistenzsystem in einem teilautonomen oder autonomen Fahrmodus in einer Fahrsituation zu keinem eindeutigen Ergebnis gelangt, das Assistenzsystem (2) von sich aus dem Fahrer (12) mehrere Handlungsoptionen anbietet und das Assistenzsystem (2) entsprechend der Antwortreaktion steuert, sodass
das Ermitteln der Handlungsoption durch die Steuereinrichtung (3) zumindest zwei unterschiedliche Ergebnisse liefert, welche von der Steuereinrichtung (3) als gleichwertig eingestuft werden, und die Anfrage zum Bereitstellen der Funktion ein Auswählen unter den Funktionen betrifft, welche den unterschiedlichen Ergebnissen entsprechen.

## Claims

1. Method for controlling an assistance system (2) of a motor vehicle (1), wherein the assistance system (2) comprises a driver assistance system, comprising the steps of:
- monitoring a driving situation of the motor vehicle (1) by the driver assistance system of the motor vehicle (1);
- determining at least one handling option for the driver (12) from the monitored driving situation by means of a control device (3) of the assistance system (2) and specifically taking into account data retrievable by means of the control device (3) independently of a user input to the assistance system (2);
- issuing a request to provide a function of the assistance system (2) to the driver (12) corresponding to the handling option, through an output device (4) of the assistance system (2);
- detecting a response of the driver by a detection device (5) of the assistance system (2); and
- providing the function of the assistance system (2) depending on the response detected by the control device (3),
**characterised in that**
the function of the assistance system (2) comprises a function of the driver assistance system relating to an overtaking manoeuvre and/or a lane choice and/or a change of lane choice, and
if the assistance system (2) in a semi-autonomous or autonomous driving mode in a driving situation does not arrive at an unambiguous result, the assistance system (2) itself offers the driver (12) several handling options and controls the assistance system (2) corresponding to the response, so that
the determination of the handling option by the control device (3) supplies at least two different results that are rated as equivalent by the control device (3), and the request to provide the function relates to a selection from the among the functions corresponding to the different results.

2. Method according to claim 1,
**characterised in that**
the output of the request is effected by a voice output device of the assistance system (2).

3. Method according to any one of the preceding claims,
**characterised in that**
the assistance system (2) comprises an information-entertainment system, and the function of the assistance system (2) comprises a function of the information-entertainment system, wherein provision of an information content and/or entertainment content is performed by the function, which in particular is adapted to a habit of the driver (12) stored in the assistance system (2) and/or to a destination stored in the driver assistance system and/or to a route stored in the driver assistance system route and/or to a schedule/appointments stored in the driver assistance system.

4. Method according to any one of the preceding claims,
**characterised in that**
the response is a voice response and the detection of the response is effected by a voice detection device of the assistance system (2).

5. Method according to any one of the preceding claims,
**characterised in that**
the motor vehicle (1) is in the monitored driving situation in an at least partially autonomous driving operation.

6. Method according to any one of the preceding claims,
**characterised in that**
the function of the assistance system (2) comprises a function of the driver assistance system which relates to a route guidance by the driver assistance system.

7. A method according to claim 6,
**characterised in that**
the function of the driver assistance system comprises a driving stabilising function and in particular the issuing of a warning message to the driver (12).

8. Method according to any one of the preceding claims,
**characterised in that**
to determine the handling option the control device (3) evaluates user-related data, in particular an electronic calendar and/or electronic messages and/or a use history of the assistance system (2), and/or vehicle-related data, in particular a vehicle state and/or a road condition and/or a driving status and/or traffic information, and/or world-related data, in particular messages and/or weather data, which in particular are retrieve by the control device (3) from a remote computing device (11).

9. Assistance system (2) for a motor vehicle (1), comprising
- a driver assistance system, which is designed to monitor a driving situation of the motor vehicle (1);
- a control device (3), which is designed to determine at least one handling option for the driver (12) resulting from the monitored driving situation, and specifically taking into account data retrievable by means of the control device (3) independently of a user input to the assistance system (2);
- an output device (4) of the assistance system (2), which is designed to issue a request to provide a function of the assistance system (2) corresponding to the action option to the driver (12);
- a detection device (5), which is designed to detect a response of the driver (12); wherein
- the control device (3) is designed to provide the function of the assistance system (2) depending on the detected response;
**characterised in that**
the function of the assistance system (2) comprises a function of the driver assistance system, which relates to an overtaking manoeuvre and/or a lane choice and/or a change of lane choice, and the assistance system (2) is arranged so that if the assistance system in a semi-autonomous or autonomous driving mode in a driving situation does not arrive at an unambiguous result, the assistance system (2) itself offers the driver (12) several handling options and controls the assistance system (2) corresponding to the response, so that
the determination of the handling option by the control device (3) offers two different results that are rated as equivalent by the control device (3), and the request to provide a function relates to a selection from among the functions corresponding to the different results.

## Revendications

1. Procédé de commande d'un système d'assistance (2) d'un véhicule automobile (1), dans lequel le système d'assistance (2) comprend un système d'assistance au conducteur, avec les étapes de :
- surveillance d'une situation de conduite du véhicule automobile (1) par le biais du système d'assistance au conducteur du véhicule automobile (1) ;
- détermination d'au moins une option d'action pour le conducteur (12) résultant de la situation de conduite surveillée par le biais d'un dispositif de commande (3) du système d'assistance (2) et ce en tenant compte de données consultables au moyen du dispositif de commande (3) indépendamment d'une saisie d'utilisateur au niveau du système d'assistance (2) ;
- émission d'une demande de mise à disposition d'une fonction du système d'assistance (2) correspondant à l'option d'action au conducteur (12) par le biais d'un dispositif d'émission (4) du système d'assistance (2) ;
- détection d'une réaction de réponse du conducteur par le biais d'un dispositif de détection (5) du système d'assistance (2) ; et
- mise à disposition de la fonction du système d'assistance (2) en fonction de la réaction de réponse détectée par le biais du dispositif de commande (3)
**caractérisé en ce que**
la fonction du système d'assistance (2) comprend une fonction du système d'assistance au conducteur, qui concerne une opération de dépassement et/ou une sélection de voie de circulation et/ou un changement de voie de circulation, et
si le système d'assistance (2) ne parvient à aucun résultat clair dans un mode de conduite partiellement autonome ou autonome dans une situation de conduite, le système d'assistance (2) propose de lui-même au conducteur (12) plusieurs options d'action et le système d'assistance (2) commande conformément à la réaction de réponse de sorte que
la détermination de l'option d'action par le biais du dispositif de commande (3) fournit au moins deux résultats différents, lesquels sont considérés comme équivalents par le dispositif de commande (3), et la demande de mise à disposition de la fonction concerne une sélection des fonctions qui correspondent aux différents résultats.

2. Procédé selon la revendication 1,
**caractérisé en ce que**
l'émission de la demande a lieu par le biais d'un dispositif d'émission vocale du système d'assistance (2).

3. Procédé selon l'une quelconque des revendications précédentes,
**caractérisé en ce que**
le système d'assistance (2) comprend un système d'information et de divertissement, et la fonction du système d'assistance (2) comprend une fonction du système d'information et de divertissement, dans lequel une mise à disposition d'un contenu d'information et/ou de divertissement a lieu par le biais de la fonction, lequel contenu est adapté en particulier à une habitude du conducteur (12) enregistrée dans le système d'assistance (2) et/ou à une destination enregistrée dans le système d'assistance au conducteur et/ou à un itinéraire enregistré dans le système d'assistance au conducteur et/ou à une durée de trajet enregistrée dans le système d'assistance au conducteur et/ou à un agenda enregistré dans le système d'assistance (2).

4. Procédé selon l'une quelconque des revendications précédentes,
**caractérisé en ce que**
la réaction de réponse est une réponse vocale et la détection de la réaction de réponse a lieu par le biais d'un dispositif de détection vocale du système d'assistance (2).

5. Procédé selon l'une quelconque des revendications précédentes,
**caractérisé en ce que**
le véhicule automobile (1) se trouve dans la situation de conduite surveillée dans un mode de conduite au moins partiellement autonome.

6. Procédé selon l'une quelconque des revendications précédentes,
**caractérisé en ce que**
la fonction du système d'assistance (2) comprend une fonction du système d'assistance au conducteur, qui concerne un guidage d'itinéraire par le biais du système d'assistance au conducteur.

7. Procédé selon la revendication 6,
**caractérisé en ce que**
la fonction du système d'assistance au conducteur comprend une fonction de stabilisation de conduite et en particulier l'émission d'un message d'avertissement au conducteur (12).

8. Procédé selon l'une quelconque des revendications précédentes,
**caractérisé en ce que**
le dispositif de commande (3) pour la détermination de l'option d'action évalue des données concernant l'utilisateur, en particulier un agenda électronique et/ou des notifications électronique et/ou un historique d'utilisation du système d'assistance (2), et/ou des données concernant le véhicule, en particulier un état de véhicule et/ou un état de route et/ou un état de conduite et/ou des données de circulation, et/ou des données concernant le monde, en particulier des actualités et/ou des données météorologiques, lesquelles sont consultées en particulier par le biais du dispositif de commande (3) à partir d'un dispositif de calcul (11) distant.

9. Système d'assistance (2) pour un véhicule automobile (1), présentant
- un système d'assistance au conducteur, lequel est conçu pour surveiller une situation de conduite du véhicule automobile (1) ;
- un dispositif de commande (3), lequel est conçu pour déterminer au moins une option d'action pour le conducteur (12) résultant de la situation de conduite surveillée, et ce en tenant compte de données consultables au moyen du dispositif de commande (3) indépendamment d'une saisie d'utilisateur au niveau du système d'assistance (2) ;
- un dispositif d'émission (4) du système d'assistance (2), lequel est conçu pour émettre une demande de mise à disposition d'une fonction du système d'assistance (2) correspondant à l'option d'action au conducteur (12) ;
- un dispositif de détection (5), lequel est conçu pour détecter une réaction de réponse du conducteur (12) ; dans lequel
- le dispositif de commande (3) est conçu pour mettre à disposition la fonction du système d'assistance (2) en fonction de la réaction de réponse détectée ;
**caractérisé en ce que**
la fonction du système d'assistance (2) comprend une fonction du système d'assistance au conducteur, qui concerne une opération de dépassement et/ou une sélection de voie de circulation et/ou un changement de voie de circulation, et
le système d'assistance (2) est aménagé pour que si le système d'assistance ne parvient à aucun résultat clair dans un mode de conduite partiellement autonome ou autonome dans une situation de conduite, le système d'assistance (2) propose de lui-même au conducteur (12) plusieurs options d'action et le système d'assistance (2) commande conformément à la réaction de réponse de sorte que
la détermination de l'option d'action par le biais du dispositif de commande (3) fournit au moins deux résultats différents, lesquels sont considérés comme équivalents par le dispositif de commande (3), et la demande de mise à disposition de la fonction concerne une sélection des fonctions qui correspondent aux différents résultats.
